# EUROPEAN PATENT SPECIFICATION

(11) **EP 0 686 419 B1**
(45) Date of publication and mention of the grant of the patent: **01.09.1999**
(21) Application number: 95108975.4
(22) Date of filing: 09.06.1995
(51) Int. Cl.: B01D 33/21, B01D 33/72

(54) **Feed means for a disc filter**
Zufuhrvorrichtung für einen Scheibenfilter
Moyens d'alimentation pour un filtre à disques

(30) Priority: 10.06.1994 FI 942730
(43) Date of publication of application: 13.12.1995
(73) Proprietor: Ahlstrom Machinery Oy, 00440 Helsinki (FI)
(72) Inventor: Lukkarinen, Seppo, SF-57170 Savonlinna (FI); Pelkiö, Ari, SF-57710 Savonlinna (FI)
(74) Representative: Görg, Klaus, Dipl.-Ing.

(56) References cited:
- EP-A- 0 315 359
- DE-C- 407 770
- FR-A- 2 564 003

## Description

The present invention relates to a feed means for a disc filter for feeding a wood processing industry fibre suspension or other such liquid suspension to be filtered into the vat of a disc-type filter.

Traditionally pulp is fed directly into a vat surrounding the discs as an overflow from a separate feed vessel arranged beside the filter vat, on the ascending side of the discs. An inherent feature of this arrangement is that the height of the weir sill changes as the level of liquid in the vat descends or ascends, and when the level of liquid in the vat is low, the weir sill can be too high. When the difference of surface levels is great and the suspension to be filtered contains certain chemical substances, such as sodium hydroxide, foaming is one of the problems in the operation of the disc filter.

Additionally, a characteristic feature of this type of filter is that, while in the vat surrounding the discs, the material to be thickened tends to thicken on the surface of the liquid at the ascending side of the discs, especially so in the wood processing industry. Then, the thickened pulp peels away the cake thickened on the ascending side of the sector, which causes problems with the operation of the filter and stresses the sector mechanically. A conventional overflow-type of feed flowing downwards along the wall of the vat will not allow the low-consistency pulp to efficiently spread between the discs to dilute the area of most concentrated pulp.

US patent 4,704,206 discloses a disc filter, in which the suspension to be treated is fed to a trough surrounding each disc. Naturally, the bottom of the trough is provided with an opening wide enough to allow the disc to rotate. According to this patent the trough is arranged on the descending side of the disc, and the suspension to be treated is allowed to flow down to the trough along the surface of the disc. Nevertheless, this method still has the same problems as feeding along the side of the vat, i.e. the foaming tendency of sodium hydroxide-containing pulp and the fact that the low-consistency pulp is not allowed to dilute the area of higher consistency pulp forming near the opposite side of the vat. In EP-A-0596856 another disc filter is disclosed.

The invention provides a disc filter as defined in claim 1.

A feature of the invention is that pulp is fed to the filter by means of a separate feed chute to each space between the discs. A characteristic feature of the apparatus according to the invention is that separate openings are arranged adjacent the upper edge of the feed chute for stabilizing the feed of pulp.

Other embodiments of the apparatus according to the invention are disclosed in the dependent claims.

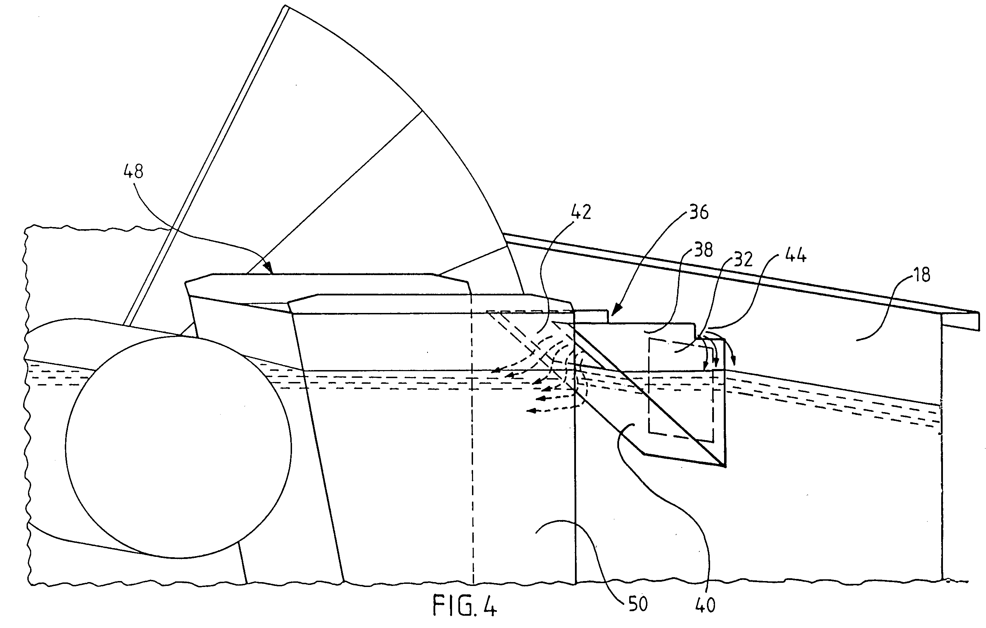

The advantages brought about by embodiments of the present invention include, among others, the following:
- it is possible to always feed the pulp onto the surface of the liquid with no weir by varying the size of the openings,
- feed flow can be directed towards the most concentrated pulp in the vat, located between the discs,
- varying the size and the number of the openings enables the feed to remain constant regardless of the capacity,
- insensitive to fluctuations of surface level in the vat,
- the flow over the edge of the chute can be optimized to be between 0-100%,
- when arranged as in fig. 4, (with the feed chute fastened between the edge of the vat and the discharge assembly) the feed chute acts as a support for the discharge assembly.

In the following, the apparatus according to the present invention is described in more detail by means of reference to the figures, of which
figure 1 is disc filter according to the prior art;
figures 2a and b are two advantageous embodiments of disc filters according to the invention, seen in transverse cross-section;
figures 3a and b are the disc filters of figures 2a and b, as seen from above;
figure 4 is another advantageous embodiment of a disc filter according to the invention, seen in a detailed perspective view;
figure 5 is a view of yet another embodiment of a disc filter according to the invention.

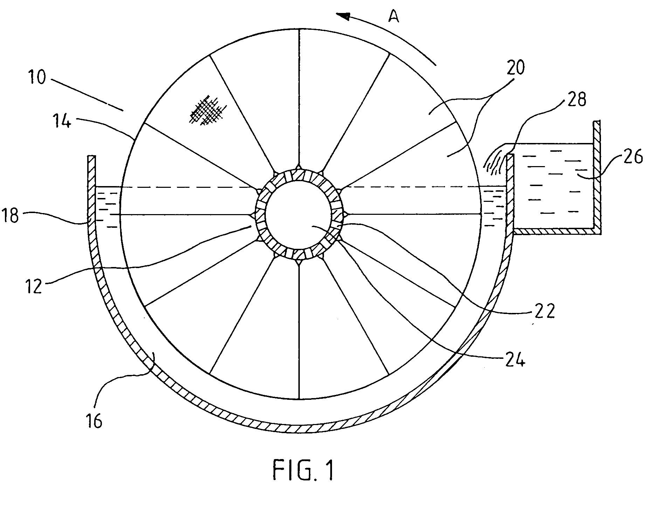

As is shown in figure 1, a prior art disc filter 10 comprises a plurality of parallel discs 14 fastened to a horizontal shaft 12 with a vat 16 surrounding the discs at their lower parts. Advantageously, the shaft 12 is supported at its ends by the end walls of the vat 16. The side walls 18 of the vat 16 ascend to about the level of the shaft 12, advantageously even slightly above them. The discs 14 of the filter 10 consist of a plurality of adjoining wire-covered sectors 20, the hollow inside of which is connected by means of flow channels 22 to the inside of the shaft 12, the inside either comprising a uniform hollow space 24 or a number of flow channels. The flow channel/s 24 of the shaft 12 are most usually connected (not shown) to a vacuum source, such as a drop leg, vacuum pump or a centrifugal pump. These apparatuses form a pressure difference (i.e. suction), which causes liquid to be withdrawn from the filtered material. A structure as shown in the figure further comprises a conventional feed plenum 26 for the treated material, from which the material is discharged into the vat 16 as an overflow over the edge 28 of the vat. Depending on the height difference of the level of material in the vat 16 and the edge 28, the material can in some circumstances start to foam. Another drawback of the solution according to figure 1 is that the material to be fed into the vat flows to the vat along its wall, whereby it does not dilute the high-concentration layer between the discs.

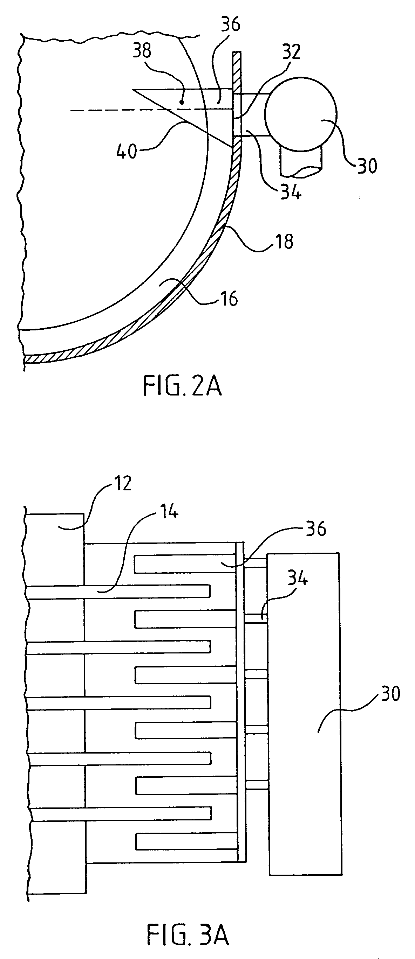

In an advantageous embodiment shown in figures 2a and 3a the disc filter 10 is otherwise similar to that in figure 1, but the feed plenum extending the length of the filter in figure 1 on the outside of the vat has been removed and replaced by a header tube assembly located beside the vat 16. The header tube assembly comprises a feed tube 30, advantageously connected by means of feed conduits 34 to openings 32 arranged so as to coincide with the spaces between each pair of discs 14 as well as with the spaces defined by outermost discs and the ends of the filter assembly. The openings 32 are arranged at the wall 18 of the vat so that, for example, their centre coincides with the average surface level of the vat. A feed chute 36 is arranged to the inside of the wall 18 of the vat 16, which according to an advantageous embodiment shown in the figure comprises two essentially upright triangular side surfaces 38, located perpendicular to the wall 18 of the vat and an inclined bottom/end surface 40, the inclination angle of which is, in this advantageous embodiment, about 30-45°. The bottom/end surface 40 is fastened to or near the lower corner of the opening 32, whence it rises upwards along the lower edges of the side surfaces 38. Thus, one edge of the side surface 38 is fastened to the wall 18 of the vat, the edge essentially perpendicular to the wall 18 is advantageously parallel with the surface of the liquid in the vat, while the third edge is connected to the ascending bottom surface 40. The bottom surface 40 is fastened by one of its edges to the side wall 18 of the vat 16 and, as previously explained, to the lower edges of the side surfaces 38 of the feed chute 36. The feed chute 36 extends to the spaces between the pairs of filter discs 14 with additionally one chute at each end of the filter. An essential feature of the invention is that the free ends of the side and bottom surface that form the upper end of the feed chute are practically always located above the liquid surface of the filter, even if the apparatus will function faultlessly also when the feed chute 36 is occasionally totally submerged in the treated liquid.

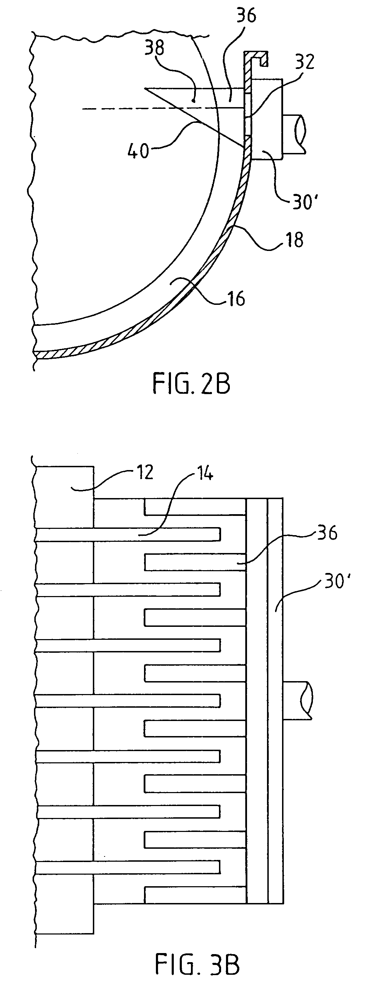

Figures 2b and 3b show another advantageous embodiment of a disc filter according to the invention, in which the feed plenum 30' is so arranged to the side of the vat 16 that the tubular feed conduits 34 as described in figures 2a and 3a are unnecessary, but they are replaced by openings in the wall between the filter vat 16 and the feed plenum 30'.

According to yet another advantageous embodiment (shown in figure 4) the bottom surface 40 of the feed chute 36 is welded at its upper part to the side walls of the feed chutes and provided with a rectangular opening 42, from which the material can flow to essentially the same level as the surface of the liquid in the vat, which prevents the forming of a detrimental flow weir. So, according to this advantageous embodiment of the invention the opening extends vertically to practically below the surface level of the liquid in the vat. According to this embodiment the side surfaces 38 are provided with a small opening 44 in the free edge area beside the wall 18 of the vat. These openings 44 are not, nevertheless, compulsory for achieving the objects of this invention, but they are useful in some special applications. Accordingly, it is possible to provide the free edge of the side surfaces 38 as well as the bottom surface 40 with a plurality of openings, by making, e.g., crenellated or rounded indentations so that the material can be discharged evenly along the whole length of the side surface. Yet, it is worth noting that the size of the openings, their height, width, form and relative location between the side surfaces and the bottom surface defines the main feed directions of the material to be treated.

Figure 4 also shows still another advantageous structure according to the invention, independent from the previous embodiment. The only addition to the above-mentioned solutions is that the discharge assembly 48 for material filtered in the filter 10 is located between the shaft 12 of the filter and the feed chute 36. The result of this is that the material being fed from the opening 42 of the feed chute collides against the wall 50 of the discharge assembly 48 and spreads evenly in every direction, thus effectively diluting the zone of thicker suspension that tends to gather on the surface of the suspension. Another alternative feature worth mentioning is that the suspension feed chute 36 can be fastened by its front part, i.e. by the free end of the bottom surface to the discharge assembly 48, whereby the stability of the whole filter apparatus is greatly improved.

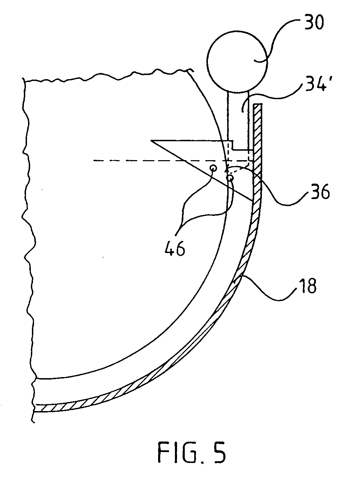

Figure 5 shows a yet further embodiment of the invention. In this embodiment, the feed headers, located beside the vat in previous embodiments, are now moved to a position essentially above the vat 16 or at least the side thereof, so that no holes need be cut in the side of the vat for feeding the material for treatment. From the feed plenum 30, the material to be treated is discharged via feed conduits 34' to the bottom of the feed chute 36, advantageously to below the surface of the liquid in the chute to avoid foaming. The end of the conduit 34' can yet be shaped to a desired form for directing the flow into the chute in a desired way. The figure also shows how the side surfaces of the chute can be provided with openings 46, which are situated below the surface of the liquid in the vat. Naturally, it is also possible to provide the bottom surface 40 of the chute 36 with corresponding openings.

According to the invention, it is possible to always feed the pulp to the surface of the vat by varying the size of the openings in the walls 38 and 40 of the feed chute 36. Additionally, it is easy to make the openings adjustable in size so as to suit the material to be treated and the desired capacity of the filter. Thus, it is possible to optimize the volume of flow over the side of the feed chute and so the volume of flow over the side can vary from 0-100%. The solution according to the invention is insensitive to changes in the level of surface in the vat. Even in extreme cases, in which the surface in the vat ascends to be level with the side of the chute or even to flow over it, the feed flow still spreads evenly to every direction.

A reason for the fact that in the above-mentioned embodiments the feed chute is shown mainly with an end discharge, i.e. feeding towards the shaft of the discs, is that the space between the discs is limited in width, typically to about 300-400 mm, which would cause a strong side-discharging flow to collide with the sector and peel the cake off the surface of the sector.

As the above description will have shown, a new disc filter capable of eliminating a great deal of the disadvantages of prior art filters has been developed. Naturally, it is clear that the number, size and positioning of the openings can be arbitrarily chosen, as the capacity and other demands of the process dictate. This also applies to the shape of the chute. It is also to be noted that only a few desirable embodiments of a disc filter according to the invention have been described in the above, and that they are by no means to be interpreted as limiting the protection of the invention. Thus, it is clear that the shape of the chute, for example, can greatly differ from that shown above, it can be curvilinearly shaped, having, e.g. a bottom curved in cross section, even semi-cylindrical or completely box-like. The only limiting factors to the shape, size and construction of the chute are the space available and the fact that the openings in the walls of the chute are located essentially adjacent the surface of the liquid and at least partly below it. Naturally, it is also possible to arrange the above-described feed means for the material to be treated on the opposite side of the filter, i.e. the descending side of the filter, but thereby some of the advantages of this new feed arrangement are lost.

## Claims

1. A disc filter comprising filter discs (14), formed by parallel sectors (20) fastened to a horizontal shaft (12) with a vat (16) surrounding the discs at least at their lower parts, and a feed apparatus for the liquid material to be treated, said feed apparatus comprising a respective feed chute (36) located at least in each space formed between the discs (14), **characterized** in that each feed chute (36) is provided with at least one opening (42, 46) arranged to either extend from an upper edge of said chute above the surface level of the material to be treated in the vat to below the surface level of the material to be treated in the vat or arranged to be situated below the surface level of the material to be treated in the vat, the at least one opening furthermore being arranged in such a manner that the material to be treated is always fed to essentially the same level as or below the level of the surface of the material to be treated in the vat.

2. A disc filter as described in claim 1, **characterized** in that the upper edge of the feed chute (36) is essentially horizontal.

3. A disc filter as described in claim 1, **characterized** in that the openings (42, 46) are rounded or rectangular indentations.

4. A disc filter as described in claim 1, **characterized** in that the feed chute (36) comprises at least two side surfaces (38) and an end surface (40), the upper edges of which form the upper edge of the feed chute (36).

5. A disc filter as described in claim 1, **characterized** in that the feed chute (36) is curvilinear in cross-section.

6. A disc filter as described in claim 1, **characterized** in that the feed apparatus further comprises a header tube assembly consisting of a feed tube (30, 30') and feed conduits (34, 34') arranged longitudinally above or beside the vat (16) for connecting the feed tube (30, 30') to the feed chutes (36).

7. A disc filter as described in claim 1, **characterized** in that the feed apparatus further comprises a header tube assembly consisting of a feed tube (30, 30') and feed conduits (34, 34') arranged longitudinally outside the vat (16) for connecting the feed tube (30, 30') to openings (32) located in the wall (18) of the vat (16).

8. A disc filter as described in claim 1, **characterized** in that the feed chute (36) is also fastened to a discharge assembly (48) provided for thickened material.

9. A disc filter as described in claim 8, **characterized** in that the bottom end (40) of the feed chute (36) is provided with an opening (42) defined at its one side by a wall (50) of the discharge assembly (48).

10. A disc filter as described in claim 1, **characterized** in that the feed chute (36) is provided with openings (46) at its side, and/or bottom surfaces (38, 40).

11. A disc filter as described in claim 1, **characterized** in that the feed chute (36) is located on the ascending side of the discs (14) in the vat (16).

12. A disc filter as described in claim 1, **characterized** in that the feed chute (36) is fastened to the wall (18) of the vat (16).

13. A disc filter as described in claim 12, **characterized** in that the wall (18) of the vat (16) is provided with an opening (32) at the location of each feed chute (36).

## Patentansprüche

1. Scheibenfilter, bestehend aus Filterscheiben (14), die aus auf einer horizontalen Welle (12) befestigten parallelen Sektoren (20) gebildet werden, wobei ein Trog (16) die Scheiben zumindest an ihrem unteren Teil umgibt, und einer Aufgabevorrichtung für das zu behandelnde flüssige Material, welche Aufgabevorrichtung jeweils eine zumindest in jedem zwischen den Scheiben (14) gebildeten Raum angeordnete Aufgaberutsche (36) umfaßt, dadurch **gekennzeichnet**, daß jede Aufgaberutsche (36) mit zumindest einer Öffnung (42, 46) versehen ist, die derart angeordnet ist, daß sie sich entweder von einer Oberkante der Rutsche über dem Oberflächenniveau des im Trog zu behandelnden Materials bis unter das Oberflächenniveau des im Trog zu behandelnden Materials erstreckt oder derart angeordnet ist, daß sie unter dem Oberflächenniveau des im Trog zu behandelnden Materials zu liegen kommt, wobei die zumindest eine Öffnung des weiteren derart angeordnet ist, daß das zu behandelnde Material stets im wesentlichen auf das gleiche Niveau oder unter dem Niveau der Oberfläche des zu behandelnden Materials im Trog aufgegeben wird.

2. Scheibenfilter nach Anspruch 1, dadurch **gekennzeichnet**, daß die Oberkante der Aufgaberutsche (36) im wesentlichen horizontal ist.

3. Scheibenfllter nach Anspruch 1, dadurch **gekennzeichnet**, daß die Öffnungen (42, 46) abgerundete oder rechteckige Einkerbungen sind.

4. Scheibenfilter nach Anspruch 1, dadurch **gekennzeichnet**, daß die Aufgaberutsche (36) zumindest zwei Seitenflächen (38) und eine Stirnfläche (40) umfaßt, deren Oberkanten die Oberkante der Aufgaberutsche (36) bilden.

5. Scheibenfilter nach Anspruch 1, dadurch **gekennzeichnet**, daß die Aufgaberutsche (36) im Querschnitt krummlinig ist.

6. Scheibenfilter nach Anspruch 1, dadurch **gekennzeichnet**, daß die Aufgabevorrichtung des weiteren eine Verteilungsrohranordnung umfaßt, die aus einem Aufgaberohr (30, 30') und Aufgabestutzen (34, 34') besteht, die in Längsrichtung über oder neben dem Trog (16) angeordnet sind, um das Aufgaberohr (30, 30') mit den Aufgaberutschen (36) zu verbinden.

7. Scheibenfilter nach Anspruch 1, dadurch **gekennzeichnet**, daß die Aufgabevorrichtung des weiteren eine aus einem Aufgaberohr (30, 30') und Aufgabestutzen (34, 34') bestehende Verteilungsrohranordnung umfaßt, die in Längsrichtung außerhalb des Trogs (16) angeordnet sind, um das Aufgaberohr (30, 30') mit in der Wand (18) des Trogs (16) angeordneten Öffnungen (32) zu verbinden.

8. Scheibenfilter nach Anspruch 1, dadurch **gekennzeichnet**, daß die Aufgaberutsche (36) auch an einer, für eingedicktes Material vorgesehene Abnahmeanordnung (48) befestigt ist.

9. Scheibenfilter nach Anspruch 8, dadurch **gekennzeichnet**, daß das untere Ende (40) der Aufgaberutsche (36) mit einer Öffnung (42) versehen ist, die auf der einen Seite durch eine Wand (50) der Abnahmeanordnung (48) begrenzt wird.

10. Scheibenfilter nach Anspruch 1, dadurch **gekennzeichnet**, daß die Aufgaberutsche (36) mit Öffnungen (46) in ihrer Seiten- und/oder Bodenfläche (38, 40) versehen ist.

11. Scheibenfilter nach Anspruch 1, dadurch **gekennzeichnet**, daß die Aufgaberutsche (36) auf der Aufstiegsseite der Scheiben (14) in Trog (16) angeordnet ist.

12. Scheibenfllter nach Anspruch 1, dadurch **gekennzeichnet**, daß die Aufgaberutsche (36) an der Wand (18) des Trogs (16) befestigt ist.

13. Scheibenfilter nach Anspruch 12, dadurch **gekennzeichnet**, daß die Wand (18) des Trogs (16) auf Höhe einer jeden Aufgaberutsche (36) mit einer Öffnung (32) versehen ist.

## Revendications

1. Filtre à disques comprenant des disques filtrants (14), constitués par des secteurs parallèles (20) fixés à un arbre horizontal (12) avec une cuve (16) entourant les disques au moins à leurs parties inférieures, et un dispositif d'alimentation pour la matière liquide à traiter, ledit dispositif d'alimentation comprenant une goulotte d'alimentation respective (36) située au moins dans chaque espace formé entre les disques (14), **caractérisé** en ce que chaque goulotte d'alimentation (36) est pourvue d'au moins un orifice (42, 46) disposé soit de façon à s'étendre à partir d'un bord supérieur de ladite goulotte au-dessus du niveau de la surface de la matière à traiter dans la cuve jusqu'en dessous du niveau de la surface de la matière à traiter dans la cuve ou disposé de façon à ce qu'il se trouve endessous du niveau de la surface de la matière à traiter dans la cuve, le au moins un orifice étant disposé en outre d'une telle manière que la matière à traiter est toujours délivrée essentiellement au même niveau que la surface de la matière à traiter dans la cuve ou en dessous de ce niveau.

2. Filtre à disques comme décrit dans la revendication 1, **caractérisé** en ce que le bord supérieur de la goulotte d'alimentation (36) est essentiellement horizontal.

3. Filtre à disques comme décrit dans la revendication 1, **caractérisé** en ce que les orifices (42, 46) sont des entailles arrondies ou rectangulaires.

4. Filtre à disques comme décrit dans la revendication 1, **caractérisé** en ce que la goulotte d'alimentation (36) comprend au moins deux surfaces latérales (38) et une surface d'extrémité (40) dont les bords supérieurs constituent le bord supérieur de la goulotte d'alimentation (36).

5. Filtre à disques comme décrit dans la revendication 1, **caractérisé** en ce que la section droite de la goulotte d'alimentation (36) est curviligne.

6. Filtre à disques comme décrit dans la revendication 1, **caractérisé** en ce que le dispositif d'alimentation comprend, en outre, un ensemble de tubes-collecteurs constitué d'un tube d'alimentation (30, 30') et de conduits d'alimentation (34, 34') disposés longitudinalement au-dessus ou à côté de la cuve (16) afin de connecter le tube d'alimentation (30, 30') aux goulottes d'alimentation (36).

7. Filtre à disques comme décrit dans la revendication 1, **caractérisé** en ce que le dispositif d'alimentation comprend, en outre, un ensemble de tubes-collecteurs constitué d'un tube d'alimentation (30, 30') et de conduits d'alimentation (34, 34') disposés longitudinalement à l'extérieur de la cuve (16) afin de raccorder le tube d'alimentation (30, 30') à des orifices (32) situés dans la paroi (18) de la cuve (16).

8. Filtre à disques comme décrit dans la revendication 1, **caractérisé** en ce que la goulotte d'alimentation (36) est également fixée à un ensemble d'évacuation (48) prévu pour une matière épaissie.

9. Filtre à disques comme décrit dans la revendication 8, **caractérisé** en ce que l'extrémité de fond (40) de la goulotte d'alimentation (36) est pourvue d'un orifice (42) défini sur l'un de ses côtés par une paroi (50) de l'ensemble d'évacuation (48).

10. Filtre à disques comme décrit dans la revendication 1, **caractérisé** en ce que la goulotte d'alimentation (36) est pourvue d'orifices (46) sur son côté, et/ou de surfaces de fond (30, 40).

11. Filtre à disques comme décrit dans la revendication 1, **caractérisé** en ce que la goulotte d'alimentation (36) est située sur le côté ascendant des disques (14) dans la cuve (16).

12. Filtre à disques comme décrit dans la revendication 1, **caractérisé** en ce que la goulotte d'alimentation (36) est fixée à la paroi (18) de la cuve (16).

13. Filtre à disques comme décrit dans la revendication 12, **caractérisé** en ce que la paroi (18) de la cuve (16) est pourvue d'un orifice (32) à l'emplacement de chaque goulotte d'alimentation (36).
